# EUROPEAN PATENT APPLICATION

(11) **EP 1 873 994 A1**
(43) Date of publication of application: **02.01.2008**
(21) Application number: 07101441.9
(22) Date of filing: 30.01.2007
(51) Int. Cl.: H04L 29/06, H04L 12/56

(54) **Quality of service securing method and apparatus**

(30) Priority: 25.05.2006 KR 20060047119
(71) Applicant: Samsung Electronics Co., Ltd., Suwon-si Gyeonggi-do 443-742 (KR)
(72) Inventor: Jang, Jeong-rok, Gyeonggi-do (KR)
(74) Representative: Robinson, Ian Michael

(57) **Abstract**

A quality of service (QoS) securing apparatus and method using a communication protocol are provided. The method of securing a QoS of a mobile terminal (201) that receives data while the mobile terminal (201) moves from a first network (202) to a second network (203) includes generating a datagram congestion control protocol (DCCP) packet including information about link characteristics of the second network (203), and transmitting the DCCP packet to a transmission side (205). When the mobile terminal (201) of a reception side (201) moves to a new network, the reception side (201) sends a transmission side (205) information on changes in link characteristics of the reception side (201), and the transmission side (205) transmits data according to the changed link characteristics, thereby securing a QoS of data communication between the reception side (201) and the transmission side (205).

## Description

Aspects of the present invention relate to a quality of service (QoS) securing apparatus and method using a communication protocol, and more particularly, to a method and apparatus for securing QoS of data communication when a mobile terminal that receives data from a transmission side moves from a first network to a second network.

A datagram congestion control protocol (DCCP) has been suggested to improve congestion control due to the fact that congestion is one of the disadvantages of a conventional user datagram protocol (UDP). The DCCP is a communication protocol having advantages of data communication using a transmission control protocol (TCP) suitable for reliable data transmission in addition to using the UDP suitable for a streaming video or music service.

Therefore, when a reception side receives data from a transmission side, the reception side transmits a confirm/acknowledge (ACK) signal to the transmission side, acknowledging that the data was received, and thereby providing the congestion control such as that used with the TCP.

However, even when the transmission side does not receive the ACK signal from the reception side, the transmission side does not retransmit the data to the reception side as is the case with UDP data communication, such as the streaming service where reliability is not such an important factor.

The DCCP provides two types of congestion control, including a congestion control ID2 (CCID2) and a congestion control ID3 (CCID3). The CCID2 confirms the ACK signal that the reception side sends using TCP-like congestion control to control the size of a congestion window indicating the maximum number of packets being transmitted. When the reception side fails to receive the data from the transmission side due to deterioration of a communication environment and thus does not send the ACK signal to the transmission side, the CCID2 reduces the size of the congestion window to maintain reliability of data transmission. The CCID3, which is a TCP-friendly rate control (TFRC), does not abruptly reduce the size of the congestion window when the reception side fails to send the ACK signal to the transmission side due to deterioration of the communication environment. In addition to the congestion control using the ACK signal, if a router relaying the reception side and the transmission side is congested, the reception side reviews a predetermined explicit congestion notification (ECN) bit in order to increase or reduce the size of the congestion window.

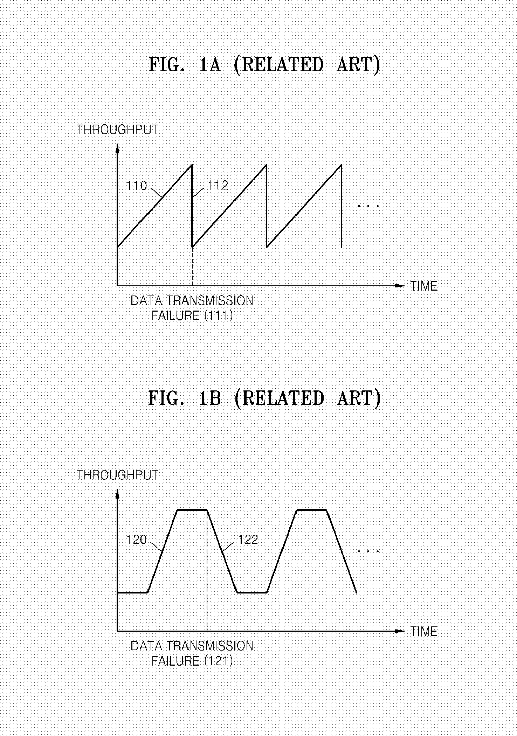

Figures 1A and 1B are graphs illustrating throughputs according to the congestion control CCID2 and CCID3. Referring to Figure 1A, the graph shows throughput processed in a specific amount of time when the CCID2 is used to control congestion. A transmission side transmits data to a reception side using a DCCP. The reception side that receives the data transmits an ACK signal to the transmission side. The transmission side gradually increases the size of a congestion window so as to gradually increase the size of data being transmitted. Therefore, the throughput indicating the amount of data transferred per unit of time gradually increases. The increasing throughput rapidly drops as illustrated in Figure 1A (111), when the reception side does not receive data from the transmission side and thus fails to send the ACK signal to the transmission side.

Referring to Figure 1B, the graph shows throughput processed in a specific amount of time when the CCID3 is used to control congestion. A transmission side transmits data to a reception side using a DCCP. The transmission side gradually increases the size of the congestion window so as to gradually increase the size of data being transmitted (120) as illustrated in Figure 1B. However, when the transmission side fails to transmit the data to the reception side (121) and thus the reception side cannot transmit the ACK signal to the transmission side, then since the transmission side gradually reduces the size of the congestion window (122), the throughput does not rapidly drop.

Since a conventional congestion control method using the DCCP is used to confirm the ACK signal sent by the reception side and gradually increase (110 or 120) the size of the congestion window with reference to Figures 1A and 1B, the throughputs gradually increase. A delay in the time used to increase the throughputs causes a network to be inefficient due to the delay in time.

This problem is more serious when the reception side performs a handover between networks as occurs with a mobile terminal. When link characteristics between end points change considerably due to a handover between heterogeneous/homogenous networks, since the transmission side is not informed of link characteristics of the reception side, the transmission side transmits data to the reception side according to link characteristics established before the reception side performed the handover. For example, when the reception side moves from a network having a data transmission rate of 10 Mbps to a network having a data transmission rate of 1 Mbps, since the transmission side is not informed of link characteristics of the reception side of the mobile terminal, the transmission side transmits data to the reception side at the data transmission rate of 10 Mbps, so that the reception side cannot receive the data from the transmission side. Therefore, when the transmission side transmits data using a protocol that does not guarantee reliability of data transmission like the UDP or the DCCP, data being transmitted is lost due to the delay in time until data congestion is controlled.

According to the present invention there is provided an apparatus and method as set forth in the appended claims. Preferred features of the invention will be apparent from the dependent claims, and the description which follows.

Several aspects and example embodiments of the present invention provide a method and apparatus for securing quality of service (QoS) in data communication between a reception side and a transmission side in spite of changes in link characteristics of the reception side.

In accordance with example embodiments of the present invention, there is provided a method of securing a quality of service (QoS) of a mobile terminal that receives data while the mobile terminal moves from a first network to a second network. Such a method comprises: generating a datagram congestion control protocol (DCCP) packet including information about link characteristics of the second network; and transmitting the DCCP packet to a transmission side.

According to an aspect of the present invention, the information about the link characteristics of the second network may include at least one of a data transmission rate, a bit error rate (BER), and a type of the second network.

According to an aspect of the present invention, the information about the link characteristics may be included in an option field of the DCCP packet when the DCCP packet is generated.

According to an aspect of the present invention, the method may further comprise: receiving a packet from the transmission side including response information about whether the transmission side received the DCCP packet; generating a DCCP packet including confirm information confirming whether the reception side received the packet including the response information from the transmission side; and transmitting the DCCP packet including the confirm information to the transmission side.

In accordance with another example embodiment of the present invention, there is provided an apparatus for securing a QoS of a mobile terminal that receives data while the mobile terminal moves from a first network to a second network. Such an apparatus comprises: a link characteristics information generating unit to generate a DCCP packet including information about link characteristics of the second network; and a link characteristics transmitting unit to transmit the DCCP packet to a transmission side.

According to an aspect of the present invention, the apparatus may further comprise: a response information receiving unit to receive a packet from the transmission side including response information about whether the transmission side received the DCCP packet; a confirm information generating unit to generate a DCCP packet including confirm information confirming whether the reception side received the packet including the response information from the transmission side; and a confirm information transmitting unit to transmit the DCCP packet including the confirm information to the transmission side.

In accordance with yet another example embodiment of the present invention, there is provided a method of securing a QoS of data performed by a transmission side that transmits the data to a mobile terminal that moves from a first network to a second network. Such a method comprises: receiving a DCCP packet including information about link characteristics of the second network from the mobile terminal; and converting the data that is to be transmitted according to the information about link characteristics of the second network included in the DCCP packet.

According to an aspect of the present invention, at least one of the number of frames per second, resolution, compressibility, and a forward error correction (FEC) of the data is changed when the data is converted.

According to an aspect of the present invention, the method may further comprise: generating a DCCP packet including response information about whether the transmission side received the DCCP packet including the information on the link characteristics; transmitting the DCCP packet including the response information to a reception side; and receiving a DCCP packet including confirm information confirming whether the mobile terminal received the DCCP packet including the response information from the transmission side.

In accordance with another embodiment of the present invention, there is provided an apparatus for securing a QoS of data performed by a transmission side that transmits the data to a mobile terminal that moves from a first network to a second network. Such an apparatus comprises: a link characteristics information receiving unit to receive a DCCP packet including information about link characteristics of the second network from the mobile terminal; and a data converting unit to convert the data that is to be transmitted according to the information about link characteristics of the second network included in the DCCP packet.

According to an aspect of the present invention, there is provided a computer readable recording medium storing a computer readable program to execute a method of securing a QoS.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figures 1A and 1B are graphs illustrating throughputs according to a conventional type of congestion control using a datagram congestion control protocol (DCCP);
Figure 2 is a diagram illustrating data communication using an extension protocol of a conventional DCCP during a handover between heterogeneous/homogeneous networks;
Figure 3 is a diagram illustrating a quality of service (QoS) securing method according to an example embodiment of the present invention;
Figures 4A and 4B are diagrams illustrating a DCCP packet, and a format and option field of the DCCP packet, respectively;
Figure 5 is a diagram of a network information notify option according to an example embodiment of the present invention;
Figure 6 is a diagram of a link characteristics information communication session between a reception side and a transmission side according to an example embodiment of the present invention;
Figure 7 is a flowchart of a QoS securing method performed by a reception side according to an example embodiment of the present invention;
Figure 8 is a block diagram of a QoS securing apparatus of a reception side according to an embodiment of the present invention;
Figure 9 is a flowchart of a QoS securing method performed by a transmission side according to an example embodiment of the present invention; and
Figure 10 is a block diagram of a QoS securing apparatus of a transmission side according to an example embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

In data communication using a datagram congestion control protocol (DCCP), a DCCP-Request packet, a DCCP-Response packet, a DCCP-Data packet, a DCCP-Ack packet, a DCCP-DataAck packet, a DCCP-CloseReq packet, a DCCP-Close packet, a DCCP-Reset packet, a DCCP-Sync packet, and a DCCP-SyncAck packet are transmitted.

The DCCP-Request packet is first sent from a client that initiates connections and can include data that is to be transmitted. The DCCP-Response packet responds to an effectively transmitted DCCP-Request packet and can include data that is to be transmitted similarly to the DCCP-Request packet. The DCCP-ACK packet informs the DCCP-Response transmitter that information has been received by a node transmitting the DCCP-ACK packet, which is discriminated from the DCCP-DataAck packet that informs the DCCP-Response transmitter about the receipt of data.

The DCCP has been suggested for communicating data between two fixed network nodes, while an extension protocol has been suggested for providing congestion control at a data transport layer on an open system interconnection (OSI) 7 layer model system and for multi-homing and mobility as well. The extension protocol provides a method of communicating data through a new network while two nodes maintain data communication. The extension protocol transmits a packet, including a predetermined message, in the DCCP-Request packet, the DCCP-Response packet, and the DCCP-ACK packet.

A node attempting to establish a first connection link transmits the DCCP-Request packet including an Initiate Gencon (generalized connection) message and a counter node transmits the DCCP-Response packet including an Approve Gencon message, thereby establishing a connection link. When it is necessary to reset links due to the node moving to a new network, the node that moved to the new network transmits the DCCP-Request packet including an Attach Gencon message, and the counter node transmits the DCCP-Response packet including a Challenge Gencon message in response to the DCCP-Request packet. Finally, the node that receives the DCCP-Response packet transmits the DCCP-ACK packet including a Confirm Gencon message so that the link is completely reset in the new network.

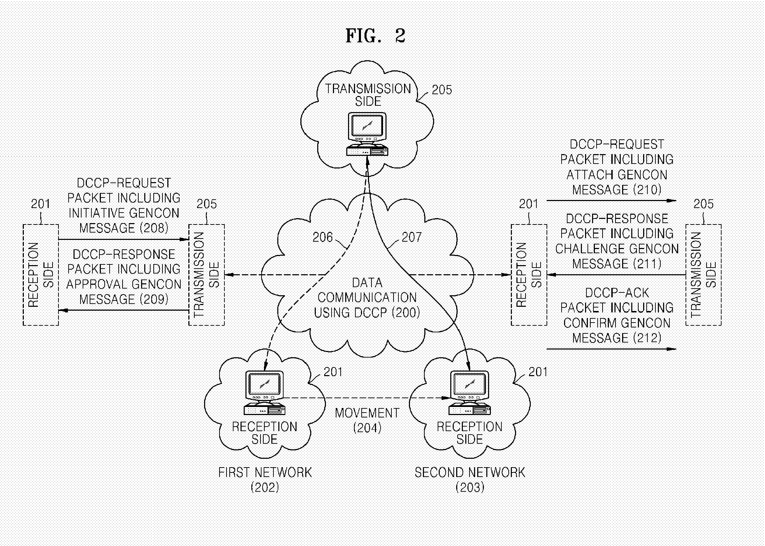

Figure 2 is a diagram illustrating data communication using an extension protocol of an example DCCP in a handover between heterogeneous/homogeneous networks. Referring to Figure 2, a reception side 201 that receives (operation 200) data from a transmission side 205 using a DCCP moves 204 from a first network 202 to a second network 203. In the first network 202, the reception side 201 transmits (operation 208) a DCCP-Request packet including an Initiate Gencon message to connect a link 206 to the transmission side 205. The transmission side 205 transmits a DCCP-Response packet including an Approve Gencon message in response to the DCCP-Request packet. The reception side 201 and the transmission side 205 communicate the DCCP-Request and DCCP-Response packets including the Initiate and Approve Gencon messages so that the link 206 between the reception side 201 and the transmission side 205 is connected in the first network 202.

When a mobile terminal of the reception side 201 moves (operation 204) from the first network 202 to the second network 203, the reception side 201 transmits a DCCP-Request packet (210) including an Attach Gencon message in order to inform the transmission side 205 that a link connection 207 is required. The transmission side 205 that receives the DCCP-Request packet transmits a DCCP-Response packet (211) including a Challenge Gencon message in order to confirm that the transmission side 205 received the DCCP-Request packet from the reception side 201. The reception side 201 that receives the DCCP-Response packet transmits a DCCP-ACK packet (212) including a Confirm Gencon message having an encryption key necessary for authenticating the reception side 201 in the transmission side 205. The reception side 201 and the transmission side 205 communicate the DCCP-Request, DCCP-Response, and DCCP-ACK packets so that the link 207 between the reception side 201 and the transmission side 205 is connected in the second network 203.

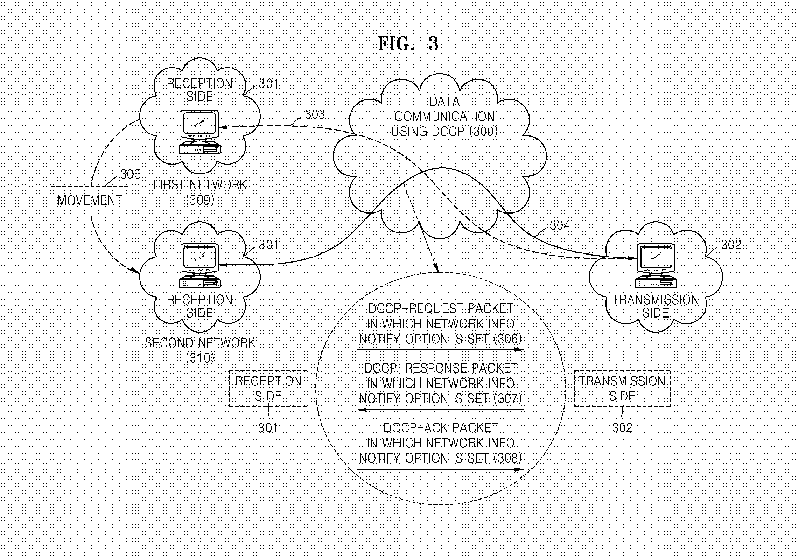

Figure 3 is a diagram illustrating data communication 300 using a DCCP via link characteristics information transmission of a quality of service (QoS) securing method according to an embodiment of the present invention. Referring to Figure 3, a reception side 301 and a transmission side 302 connect a link 303 using a DCCP-Request packet and a DCCP-Response packet in a first network 309, which is identical to that illustrated in Figure 2. However, a mobile terminal of the reception side 301 that moves (operation 305) from the first network 309 to a second network 310 and the transmission side 302 that connects a new link 304 is an improvement over the data communication illustrated in Figure 2.

The reception side 301 transmits a DCCP-Request packet including an Attach Gencon message informing the transmission side 302 that the reception side 301 moved (operation 305) to the second network 310. However, according to the shown embodiment of the present invention, the reception side 301 sets an option field of the DCCP-Request packet to a network information notify option informing the transmission side 302 of link characteristics of the second network 310 and transmits (operation 306) the DCCP-Request packet including information about the link characteristics of the second network 310.

The information about the link characteristics can include every piece of link characteristics which might influence data communication in the second network 310 such as a data transmission rate of the second network 310, a bit error rate (BER), types of networks (e.g., wireless communication standards such as the Institute of Electrical and Electronic Engineers (IEEE ) 802.11a, IEEE 802.11b, Code Division Multiple Access (CDMA) , Wideband-CDMA (W-CDMA ), etc.), etc.

The network information notify option is provided in an embodiment of the present invention and will be described in detail later.

The transmission side 302 transmits a DCCP-Response packet including a Challenge Gencon message in response to the DCCP-Request packet sent from the reception side 301. Like the transmission (operation 306) of the DCCP-Request packet, the transmission side 302 sets an option field of the DCCP-Response packet to the network information notify option and transmits (operation 307) the DCCP-Response packet to the reception side 301. According to the shown embodiment of the present invention, the option of the DCCP-Response packet does not necessarily have to be identical to that of the DCCP-Request packet. The option field of the DCCP-Response packet can be set to an option other than the network information notify option.

The reception side 301 that receives the DCCP-Response packet from the transmission side 302 finally transmits (operation 308) a DCCP-ACK packet in order to confirm that the reception side 301 received the DCCP-Response packet. At this time, the reception side 301 sets an option field of the DCCP-ACK packet to the network information notify option. Like the DCCP-Response packet, the option of the DCCP-ACK packet does not necessarily have to be identical to that of the DCCP-Request packet or the DCCP-Response packet. The option field of the DCCP-ACK packet can be set to an option other than the network information notify option.

As described above, the reception side 301 and the transmission side 302 communicate the packets including link characteristics information in order to connect a link in the second network 310, which provides the QoS securing method in which the reception side 301 informs the transmission side 302 of link characteristics of a changed network so that the transmission side 302 can transmit data according to the link characteristics of the changed network.

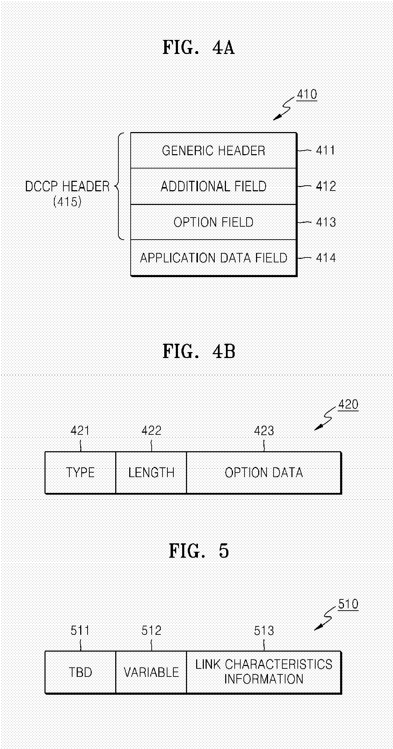

Figures 4A and 4B are diagrams of a DCCP packet 410, and a format and option field 420 of the DCCP packet 410, respectively. Referring to Figure 4A, a DCCP header 415 comprises a generic header 411, an additional field 412 which is additionally included according to type of packet, and an option field 413 used to selectively perform a predetermined function. The DCCP packet 410 comprises an application data field 414 containing application data that is to be transmitted and the DCCP header 415.

Referring to Figure 4B, the format and option field 420 of the DCCP packet 410 comprises a type field 421 indicating the type of option, a length field 422 indicating the length of an option data field 423, and the option data field 423 indicating data included in the option field 420 according to the type of option. The type field 421 and the length field 422 are set to 1 byte. The option data field 423 is determined according to the length field 422. However, the length of the option field 420 is a multiple of 4 bytes, i.e., 32 bits. If the length of the option field 420 is not the multiple of 4 bytes, it is padded with a 0 bit.

Table 1 shows the definition of the DCCP option field 420.

**[Table 1]**

| Type | Option Length | Meaning |
|---|---|---|
| 0 | 1 | Padding |
| 1 | 1 | Mandatory |
| 2 | 1 | Slow Receiver |
| 3-31 | 1 | Reserved |
| 32 | Variable | Change L |
| 33 | Variable | Confirm L |
| 34 | Variable | Change R |
| 35 | Variable | Confirm R |
| 36 | Variable | Init Cookie |
| 37 | 3-5 | NDP Count |
| 38 | Variable | Ack Vector [N once 0] |
| 39 | Variable | Ack Vector [N once 0] |
| 40 | Variable | Data Dropped |
| 41 | 6 | Timestamp |
| 42 | 6/8/10 | Timestamp Echo |
| 43 | 4/6 | Elapsed time |
| 44 | 6 | Data Checksum |
| 45-127 | Variable | Reserved |
| 128-255 | Variable | CCID-specific options |

Referring to Table 1, the length of the option data field 423 having option types 45-127 is variable, and no definition of the use of the option field 420 is included. According to the current embodiment of the present invention, a reception side (see 301 in Figure 3) includes link characteristics information of the reception side in the option field 420, for example, at option types 45-127, in order to be able to transmit the link characteristics information to a transmission side.

Figure 5 is a diagram of a network information notify option 510 according to an embodiment of the present invention.

As described with reference to Figure 3, the network information notify option 510 includes information about link characteristics of a reception side 301, and the information about the link characteristics can include every piece of link characteristics which might influence data communication between the reception side 301 and a transmission side (see 302 in Figure 3) due to a change in a communication environment of the reception side 301.

Referring to Figure 5, the network information notify option 510 newly defined in the current embodiment of the present invention sets the type field 421 illustrated in Figure 4B to a predetermined value between 47-127. Link characteristics information 513 is included in the option data field 423 illustrated in Figure 4B. The length field 422 is set to be variable 512 since type and size of link characteristics information included in the option data field 423 are variable.

Options of a DCCP-Request packet, a DCCP-Response packet, and a DCCP-ACK packet need not necessarily be set identical to each other. All methods of transmitting link characteristics included in the option field 510 and the DCCP packets to a counter node are within the scope of a DCCP packet generating method according to embodiments of the present invention.

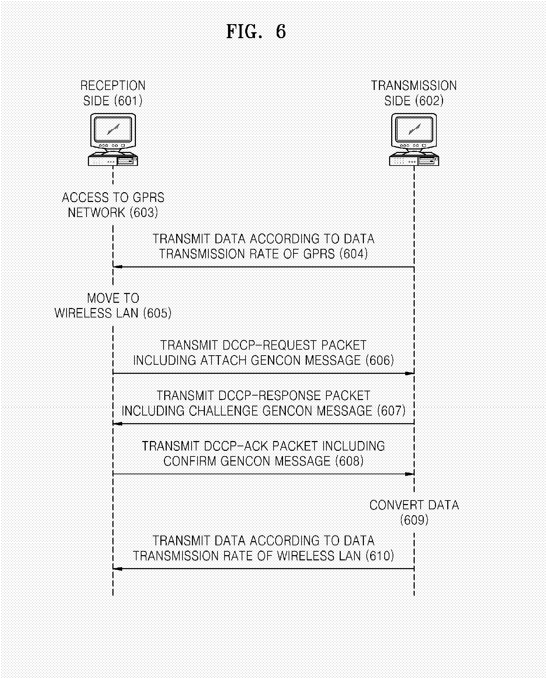

Figure 6 is a diagram of a link characteristics information communication session between a reception side and a transmission side according to an embodiment of the present invention. Referring to Figure 6, a reception side 601 moves to a wireless LAN (operation 605) while receiving data from a transmission side 602 in a general packet radio service (GPRS) network. The reception side 601 accesses (operation 603) the GPRS network so that the reception side 601 receives (operation 604) data from the transmission side 602, at a data transmission rate supported by the GPRS network. When the reception side 601 moves (operation 605) to the wireless LAN, the reception side 601 transmits (operation 606) a DCCP-Request packet including an Attach Gencon message in which link characteristics information (for example, 513 in Figure 5) is included in an option field of the DCCP-Request packet (for example, 510 in Figure 5).

The data transmission rate of the wireless LAN can be included in the DCCP-Request packet as link characteristics information 513. The transmission side 602 that receives the DCCP-Request packet transmits (operation 607) a DCCP-Response packet including a Challenge Gencon message in response to the DCCP-Request packet. The option field 413 of the DCCP-Response packet includes response information indicating whether the transmission side 602 received the link characteristics information 513 included in the DCCP-Request packet from the reception side 601. The reception side 601 that receives the DCCP-Response packet must transmit (operation 608) a DCCP-ACK packet according to an extension protocol of a DCCP. The DCCP-ACK packet can include confirm information confirming whether the reception side 601 received the response information included in the DCCP-Response packet. The option field 413 of the DCCP-ACK packet can include the confirm information. The transmission side 602 that receives the DCCP-ACK packet converts (operation 609) data that is to be transmitted to the reception side 601 based on the link characteristics information included in the DCCP-Request packet received from the reception side 601. After the transmission side 602 converts the data (operation 609), the transmission side 602 transmits data through a link of a changed network.

According to the shown embodiment of the present invention, the transmission side 602 transmits (operation 610) data in accordance with a data transmission rate of the wireless LAN. If the data being transmitted is video data or music data, the transmission side 602 can convert the data by changing the number of frames per second, resolution, compressibility, and a forward error correction (FEC) of the video data or the music data. For example, the transmission side 602 encodes video according to link characteristics using a scalable video codec (SVC) in order to transmit video data having a quality suitable for the link characteristics of the reception side 601.

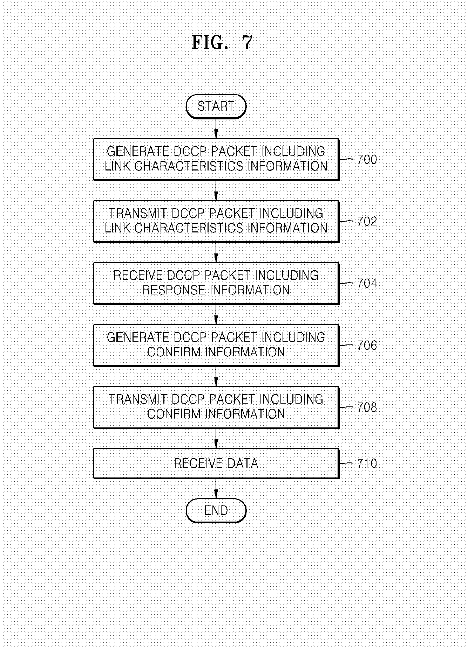

Figure 7 is a flowchart of a QoS securing method performed by a reception side according to an embodiment of the present invention. Referring to Figure 7, the reception side (for example, 601 in Figure 6) generates a DCCP packet including information about link characteristics (for example, 513 in Figure 5) of a new network (for example, 310 in Figure 3) when the reception side moves to the new network (Operation 700). As described above, an Attach Gencon message may be included in an option field 413 of a DCCP-Request packet.

The reception side 601 transmits the DCCP packet to a transmission side (Operation 702).

The reception side 601 receives a DCCP packet from the transmission side (for example, 602 in Figure 6), including response information informing the reception side 601 whether the transmission side 602 received the DCCP packet from the reception side (Operation 704).

The reception side 601 that receives the response information generates a DCCP packet including confirm information informing the transmission side 602 whether the reception side received the response information from the transmission side (Operation 706). As described above, a Confirm Gencon message is included in an option field 413 of a DCCP-ACK packet. Alternatively, the DCCP-ACK packet may not include the confirm information.

The reception side 601 transmits the DCCP packet including the confirm information to the transmission side (Operation 708). The reception side 601 that transmits the link characteristics of the new network 310 to the transmission side 602 in Operations 700 through 708 receives data transmitted from the transmission side 602 according to changes in the link characteristics (Operation 710).

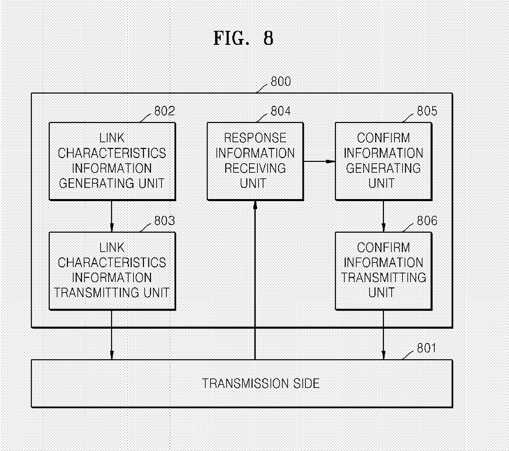

Figure 8 is a block diagram of a QoS securing apparatus 800 of a reception side (for example, 601 in Figure 6) according to an embodiment of the present invention. Referring to Figure 8, the QoS securing apparatus 800 comprises a link characteristics information generating unit 802, a link characteristics transmitting unit 803, a response information receiving unit 804, a confirm information generating unit 805, and a confirm information transmitting unit 806.

The link characteristics information generating unit 802 generates a DCCP packet including information about link characteristics of a new network (for example, 310 in Figure 3) when a reception side 601 moves to the new network 310.

The link characteristics transmitting unit 803 transmits the DCCP packet to a transmission side 801.

The response information receiving unit 804 receives a DCCP packet from the transmission side 801 including response information informing the reception side 601 whether the transmission side 801 received the information about the link characteristics.

The confirm information generating unit 805 generates a DCCP packet including confirm information informing the transmission side 801 whether the response information is received from the transmission side 801.

The confirm information transmitting unit 806 transmits the DCCP packet including confirm information to the transmission side 801.

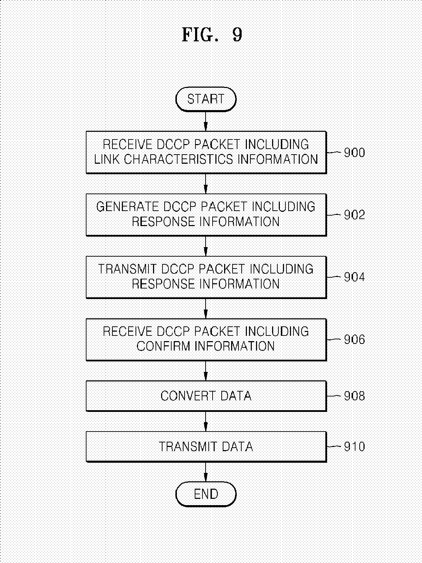

Figure 9 is a flowchart of a QoS securing method performed by a transmission side according to an embodiment of the present invention. Referring to Figure 9, a transmission side (for example, 602 in Figure 6) receives a DCCP packet including link characteristics information (for example, 513 in Figure 5) from a reception side (Operation 900).

The transmission side generates a DCCP packet including response information informing the reception side (for example, 601 in Figure 6) whether the transmission side received the link characteristics information 513 from the reception side (Operation 902). As described above, the response information may be included in an option field 413 of a DCCP-Response packet including a Challenge Gencon message.

The transmission side 602 transmits the DCCP packet including the response information to the reception side (Operation 904). When the reception side 601 that receives the DCCP packet including the response information sends the transmission side 602 a DCCP packet including confirm information about whether the reception side 601received the response information from the transmission side 602, the transmission side 602 receives the DCCP packet including the confirm information (Operation 906). The transmission side 602 that receives the confirm information converts data (Operation 908) in order to transmit data according to the link characteristics information 513 of the reception side 601, and transmits the data to the reception side (Operation 910).

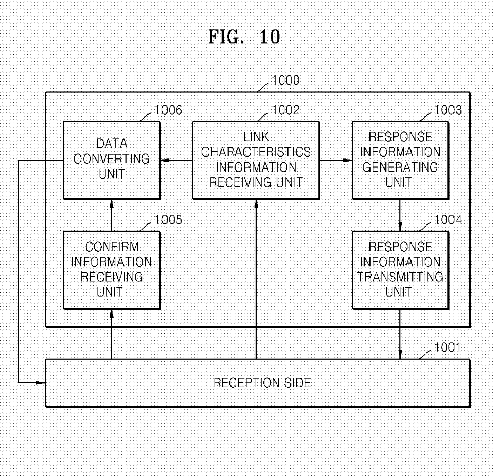

Figure 10 is a block diagram of a QoS securing apparatus 1000 of a transmission side according to an embodiment of the present invention. Referring to Figure 10, the QoS securing apparatus 1000 comprises a link characteristics information receiving unit 1002, a response information generating unit 1003, a response information transmitting unit 1004, a confirm information receiving unit 1005, and a data converting unit 1006.

The link characteristics information receiving unit 1002 receives a DCCP packet including link characteristics information 513 from a reception side 1001 when the reception side 1001 moves to a new network 310.

The response information generating unit 1003 generates a DCCP packet including response information informing the reception side 1001 whether the transmission side (for example, 602 in Figure 6) received the link characteristics information 513 from the reception side 1001. The response information transmitting unit 1004 transmits the DCCP packet generated by the response information generating unit 1003 to the reception side 1001.

The confirm information receiving unit 1005 receives a DCCP packet including confirm information from the reception side 1001 that receives the response information.

The data converting unit 1006 converts data according to the link characteristics information 513 received by the link characteristics information receiving unit 1002. As described above, if the data is video data or music data, the data converting unit 1006 can convert the data by changing the number of frames per second, resolution, compressibility, or a forward error correction (FEC) of the video or music data.

Aspects of the invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed network coupled computer systems so that the computer readable code is stored and executed in a distributed fashion. Also, aspects of the invention may be embodied in computer-readable code embodied as a computer data signal in a carrier wave.

According to aspects of the present invention, when a mobile terminal of a reception side moves to a new network, the reception side sends a transmission side information about changes in link characteristics of the reception side, and the transmission side transmits data according to the changed link characteristics, thereby securing a QoS of data communication between the reception side and the transmission side.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of securing a quality of service (QoS) of a mobile terminal (201) that receives data while the mobile terminal (201) moves from a first network (202) to a second network (203), the method comprising:
generating a datagram congestion control protocol (DCCP) packet including information about link characteristics of the second network (203); and
transmitting the DCCP packet to a transmission side (205).

2. The method of claim 1, wherein the information about the link characteristics of the second network (203) includes at least one of a data transmission rate, a bit error rate (BER), and a type of the second network (203).

3. The method of claim 1 or 2, wherein the information about the link characteristics is included in an option field of the DCCP packet when the DCCP packet is generated.

4. The method of claim 3, wherein the DCCP packet is a DCCP-Request packet.

5. The method of claim 4, wherein the DCCP packet includes an Attach Gecon (generalized connection) message.

6. The method of any preceding claim, further comprising:
receiving a packet from the transmission side (205) including response information about whether the transmission side (205) received the DCCP packet;
generating a DCCP packet including confirm information confirming whether the mobile terminal (201) at a reception side (201) received the packet including the response information from the transmission side (205); and
transmitting the DCCP packet including the confirm information to the transmission side (205).

7. The method of claim 6, wherein the confirm information is included in an option field of a DCCP-ACK packet when the DCCP packet including the confirm information is generated.

8. The method of claim 7, wherein the DCCP-ACK packet includes a Confirm Gencon message.

9. An apparatus to secure a QoS of a mobile terminal (201) that receives data while the mobile terminal (201) moves from a first network (202) to a second network (203), the apparatus comprising:
a link characteristics information generating unit (802) to generate a DCCP packet including information about link characteristics of the second network (203); and
a link characteristics transmitting unit (803) to transmit the DCCP packet to a transmission side (205).

10. The apparatus of claim 9, wherein the link characteristics information generating unit (802) includes the information about the link characteristics in an option field of a DCCP-Request packet when generating the DCCP packet.

11. The apparatus of claim 9 or 10, further comprising:
a response information receiving unit (804) to receive from the transmission side (205) a packet including response information about whether the transmission side (205) received the DCCP packet;
a confirm information generating unit (805) to generate a DCCP packet including confirm information confirming whether the reception side (201) received the packet including the response information from the transmission side (205); and
a confirm information transmitting unit (806) to transmit the DCCP packet including the confirm information to the transmission side (205).

12. The apparatus of claim 11, wherein the confirm information generating unit (805) includes the confirm information in an option field of a DCCP-ACK packet to generate the DCCP packet including the confirm information.

13. A method of securing a QoS of data performed by a transmission side (205) that transmits the data to a mobile terminal (201) that moves from a first network (202) to a second network (203), the method comprising:
receiving a DCCP packet including information about link characteristics of the second network (203) from the mobile terminal (201); and
converting the data that is to be transmitted according to the information about link characteristics of the second network (203) included in the DCCP packet.

14. The method of claim 13, wherein at least one of the number of frames per second, resolution, compressibility, and a forward error correction (FEC) of the data is changed when the data is converted.

15. The method of claim 13 or 14, further comprising:
generating a DCCP packet including response information about whether the transmission side (205) received the DCCP packet including the information on the link characteristics;
transmitting the DCCP packet including the response information to a reception side (201); and
receiving a DCCP packet including confirm information confirming whether the mobile terminal (201) received the DCCP packet including the response information from the transmission side (205).

16. The method of claim 15, wherein the response information is included in an option field of a DCCP-Response packet when the DCCP packet including the response information is generated.

17. The method of claim 16, wherein the DCCP-Response packet includes a Challenge Gencon message.

18. An apparatus to secure a QoS of data performed by a transmission side (205) that transmits the data to a mobile terminal (201) that moves from a first network (202) to a second network (203), the apparatus comprising:
a link characteristics information receiving unit (1002) to receive a DCCP packet including information about link characteristics of the second network (203) from the mobile terminal (201); and
a data converting unit (1006) to convert the data that is to be transmitted according to the information about link characteristics of the second network (203) included in the DCCP packet.

19. The apparatus of claim 18, wherein the data converting unit (1006) converts at least one of the number of frames per second, resolution, compressibility, and an FEC of the data.

20. The apparatus of claim 18 or 19, further comprising:
a response information generating unit (1003) to generate a DCCP packet including response information about whether the transmission side (205) received the DCCP packet including the information on the link characteristics;
a response information transmitting unit (1004) to transmit the DCCP packet including the response information to a reception side (201); and
a confirm information receiving unit (1005) to receive a DCCP packet including confirm information confirming whether the mobile terminal (201) received the DCCP packet including the response information from the transmission side (205).

21. The apparatus of claim 20, wherein the response information generating unit (1003) includes the response information in an option field of a DCCP-Response packet.

22. A computer readable recording medium storing a computer readable program to execute the method of any of claims 1 to 8.

23. A computer readable recording medium storing a computer readable program to execute the method of any of claims 13 to 17.
